(19) Europäisches Patentamt
European Patent Office
Office européen des brevets

(11) **EP 2 618 480 A2**

(12) **EUROPEAN PATENT APPLICATION**

(43) Date of publication:
24.07.2013 Bulletin 2013/30

(51) Int Cl.:
**H02P 21/00** (2006.01)

(21) Application number: 12199376.0

(22) Date of filing: 26.12.2012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 28.12.2011 JP 2011290131

(71) Applicant: **MITSUBISHI HEAVY INDUSTRIES, LTD.**
**Tokyo 108-8215 (JP)**

(72) Inventors:
• **Kanie, Tetsuo**
**Minato-ku, Tokyo, 108-8215 (JP)**
• **Sumito, Kiyotaka**
**Minato-ku, Tokyo, 108-8215 (JP)**
• **Shimizu, Kenji**
**Minato-ku, Tokyo, 108-8215 (JP)**
• **Sato, Takeshi**
**Minato-ku, Tokyo, 108-8215 (JP)**

(74) Representative: **Intès, Didier Gérard André et al**
**Cabinet Beau de Loménie**
**158, rue de l'Université**
**75340 Paris Cedex 07 (FR)**

(54) **Motor control device and air conditioner**

(57)    Provided is a motor control device (1) including a first processing section (21) that generates a first d-axis current command by performing integral control on a difference between a rotation-speed command for a motor and an estimated rotation speed of the motor; a second processing section (22) that generates a second d-axis current command, which is a predetermined value; and a selecting section (23) that selects the first d-axis current command if the present operational state is in a field-weakening control region or selects the second d-axis current command if the present operational state is not in the field-weakening control region.

FIG. 1

EP 2 618 480 A2

**Description**

{Technical Field}

The present invention relates to motor control devices and air conditioners.

{Background Art}

In a permanent-magnet synchronous motor, the induced voltage increases in accordance with the rotation speed. Therefore, in a high-speed rotation region in which the voltage exceeds a maximum output voltage that can be output from an inverter, field-weakening control is generally performed for suppressing the terminal voltage of the motor by applying a negative current to a d-axis current.

For example, in the related art, Patent Literatures 1 and 2 disclose known methods of performing field-weakening control on the permanent-magnet synchronous motor.

In the method disclosed in Patent Literature 1, a DC voltage of the inverter is detected by using a voltage sensor, and the d-axis current is controlled so that the induced voltage of the motor does not exceed the DC voltage of the inverter. More specifically, a d-axis current command is generated on the basis of the relationship between the DC voltage input to the inverter, the motor torque, and the rotation speed of the motor, and control is performed for making the d-axis current follow the d-axis current command.

{Citation List}

{Patent Literature}

{PTL 1}
Japanese Unexamined Patent Application, Publication No. 2000-278982
{PTL 2}
PCT International Publication No. WO 2005/093943

{Summary of Invention}

{Technical Problem}

The d-axis current command in field-weakening control in the related art involves complicated calculation expressions that include square roots and divisions, as disclosed in Patent Literature 1, and also use motor constants. Therefore, when the DC voltage of the inverter fluctuates, for example, these complicated calculations need to be constantly performed in real time. With an inexpensive microcomputer, it is difficult to keep up with the calculation process. Furthermore, since the motor constants change depending on the load state of the motor and the temperature, an error occurs in the d-axis current command due to these effects, possibly making it difficult to perform field-weakening control sufficiently.

An object of the present invention is to provide a motor control device and an air conditioner that can generate a d-axis current command by a simple calculation expression without using a motor constant.

{Solution to Problem}

A first aspect of the present invention provides a motor control device including an inverter that converts a DC voltage into a three-phase AC voltage and outputs the three-phase AC voltage to a motor; and inverter controlling means for controlling the inverter. The motor control device performs field-weakening control by applying a negative current to a d-axis current. The inverter controlling means includes d-axis-current-command generating means for generating a d-axis current command. The d-axis-current-command generating means includes first processing means for generating a first d-axis current command by performing integral control on a difference between a rotation-speed command for the motor and an estimated rotation speed of the motor; second processing means for generating a second d-axis current command, which is a predetermined value; and selecting means for selecting the first d-axis current command if the present operational state is in a field-weakening control region or selecting the second d-axis current command if the present operational state is not in the field-weakening control region.

According to this aspect, in the field-weakening control region, the d-axis current command is generated by performing integral control on the difference between the rotation-speed command for the motor and the estimated rotation speed of the motor so that the calculation process for the d-axis current command in field-weakening control can be significantly simplified. As a result, an inexpensive microcomputer can be used as the inverter controlling means, thereby achieving cost reduction. Moreover, since the d-axis current command is directly calculated on the basis of the rotation-speed difference, effective responsiveness to fast fluctuations in rotation speed can be expected.

In the aforementioned motor control device, the first processing means may generate the first d-axis current command by performing proportional-integral control on the difference between the rotation-speed command and the estimated rotation speed.

By adding proportional control to integral control in this manner, improved accuracy can be achieved.

In the aforementioned motor control device, the selecting means may determine that the present operational state is in the field-weakening control region if a line voltage command for the motor exceeds a maximum output voltage of the inverter set on the basis of the DC voltage input to the inverter.

The line voltage command for the motor may be a value actually measured by a sensor or may be a line voltage command estimated by using a three-phase voltage command or a two-phase voltage command used for generating a gate drive signal to be sent to the inverter.

In the aforementioned motor control device, the inverter controlling means may include q-axis-current-command generating means for generating a q-axis current command that causes the difference between the rotation-speed command for the motor and the estimated rotation speed of the motor to be closer to zero; voltage-command generating means for generating a two-phase voltage command on the basis of the d-axis current command and the q-axis current command; gate-drive-signal generating means for generating a gate drive signal to be output to the inverter on the basis of the two-phase voltage command; and motor-rotation-speed estimating means for calculating the estimated rotation speed by using a two-phase current obtained on the basis of a current of the motor and the two-phase voltage command generated by the voltage-command generating means.

With this configuration, the two-phase voltage command constituted of the d-axis current command and the q-axis current command is generated by the voltage-command generating means by using the d-axis current command generated by the d-axis-current-command generating means and the q-axis current command generated by the q-axis-current-command generating means. Based on the two-phase voltage command, the gate-drive-signal generating means generates the gate drive signal to be output to the inverter. Moreover, the two-phase voltage command generated by the voltage-command generating means is input to the motor-rotation-speed estimating means together with the two-phase current so that the estimated rotation speed of the motor is calculated on the basis of the input information. The estimated rotation speed calculated by the motor-rotation-speed estimating means is sent to the d-axis-current-command generating means and the q-axis-current-command generating means, where the d-axis current command and the q-axis current command are respectively generated by using this estimated rotation speed.

In the aforementioned motor control device, when over-modulation control in which a voltage utilization ratio is 1 or greater is performed, the motor-rotation-speed estimating means may calculate the estimated rotation speed by using a two-phase voltage command obtained from a three-phase voltage command based on the gate drive signal generated by the gate-drive-signal generating means and the two-phase current.

With this configuration, the motor-rotation-speed estimating means receives the two-phase voltage command obtained from the three-phase voltage command based on the gate drive signal generated by the gate-drive-signal generating means in place of the two-phase voltage command generated by the voltage-command generating means. Consequently, the accuracy for estimating the rotation speed of the motor in the motor-rotation-speed estimating means can be improved.

In the aforementioned motor control device, the second d-axis current command may be set to, for example, zero.

By setting the second d-axis current command to zero, the d-axis current command can be readily generated during normal operation, that is, in an operational state that is not in the field-weakening control region.

In the aforementioned motor control device, the second processing means may generate the second d-axis current command by using a minimum current control curve obtained from the characteristics of the motor.

By setting the second d-axis current command on the basis of the minimum current control curve, highly-efficient operation can be achieved during normal operation, that is, in an operational state that is not in the field-weakening control region.

A second aspect of the present invention provides an air conditioner including the aforementioned motor control device and a compressor motor that is driven and controlled by the motor control device.

{Advantageous Effects of Invention}

The present invention is advantageous in that it can generate a d-axis current command by a simple calculation expression without using a motor constant.

{Brief Description of Drawings}

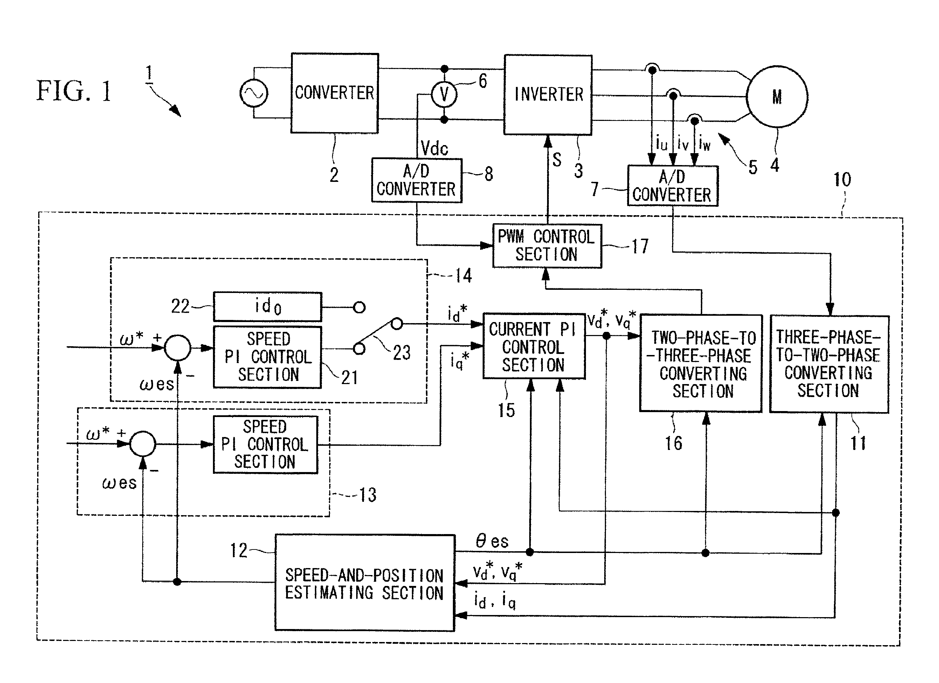

{Fig. 1} Fig. 1 schematically illustrates the configuration of a motor control device according to a first embodiment of the present invention.

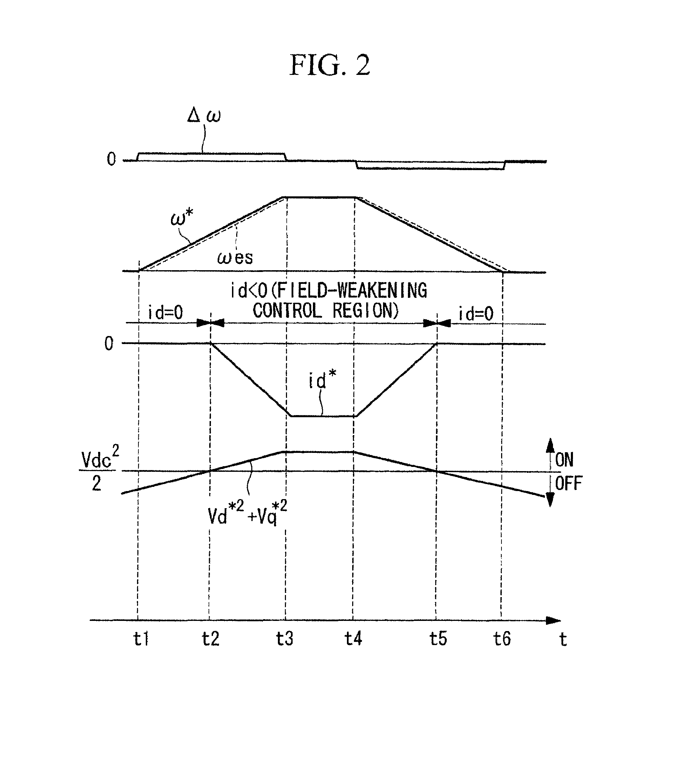

{Fig. 2} Fig. 2 is a timing chart for explaining a change in a d-axis current command when a rotation-speed command changes, in the motor control device according to the first embodiment of the present invention.

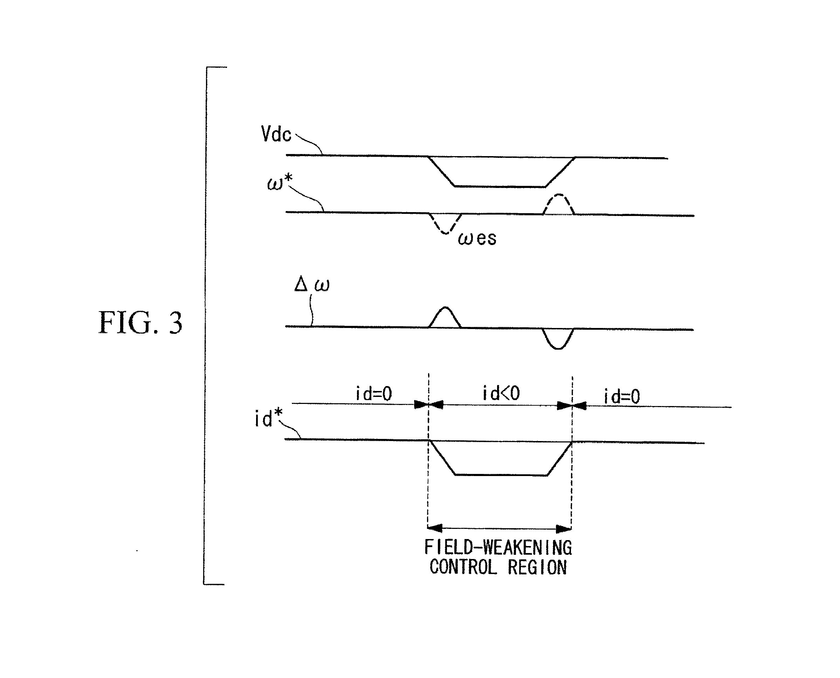

{Fig. 3} Fig. 3 is a timing chart for explaining a change in the d-axis current command when the motor torque changes, in the motor control device according to the first embodiment of the present invention.

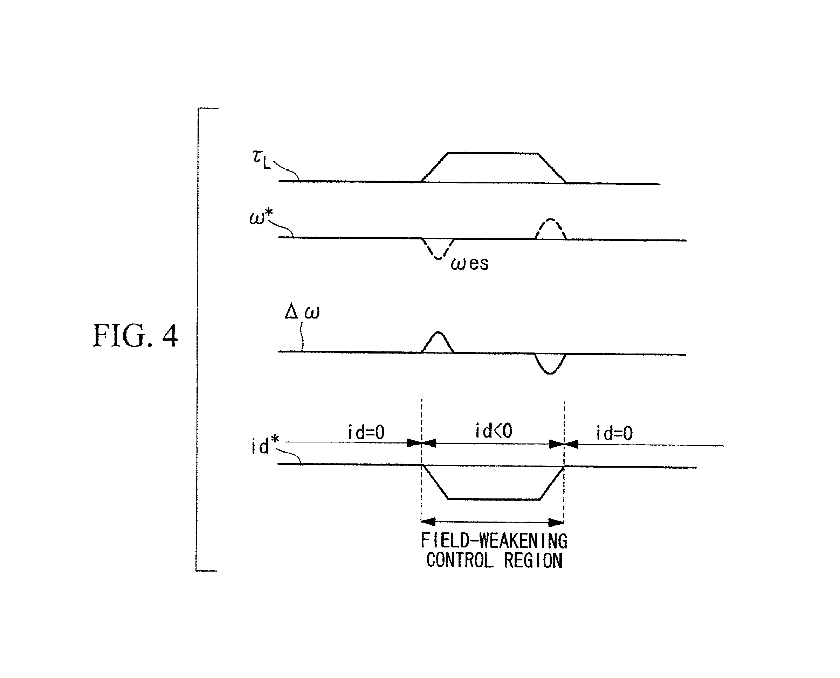

{Fig. 4} Fig. 4 is a timing chart for explaining a change in the d-axis current command when an input DC voltage of an inverter changes, in the motor control device according to the first embodiment of the present invention.

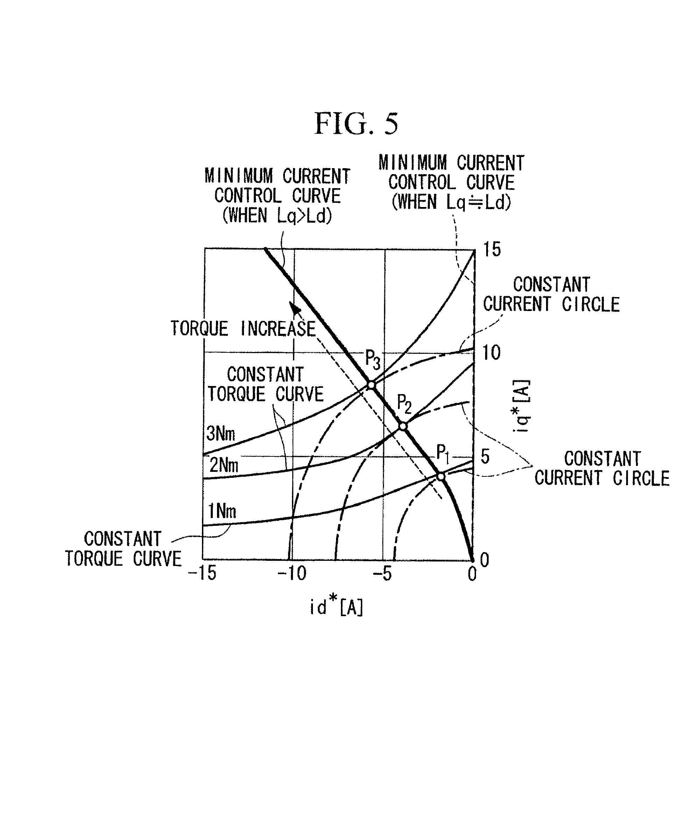

{Fig. 5} Fig. 5 illustrates an example of a minimum current control curve.

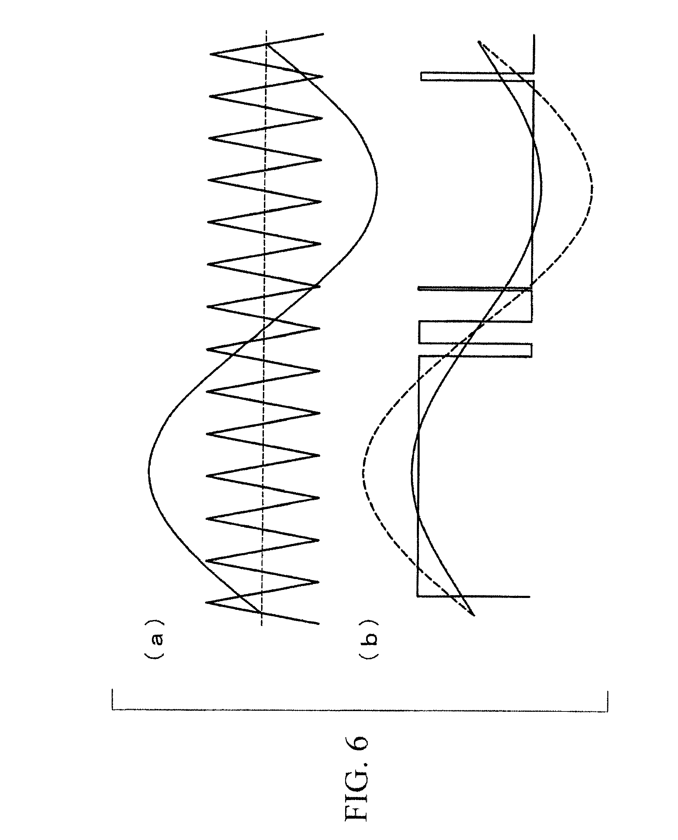

{Fig. 6} Fig. 6 illustrates a comparison between a voltage command input to a PWM control section and a motor phase voltage when over-modulation control is performed.

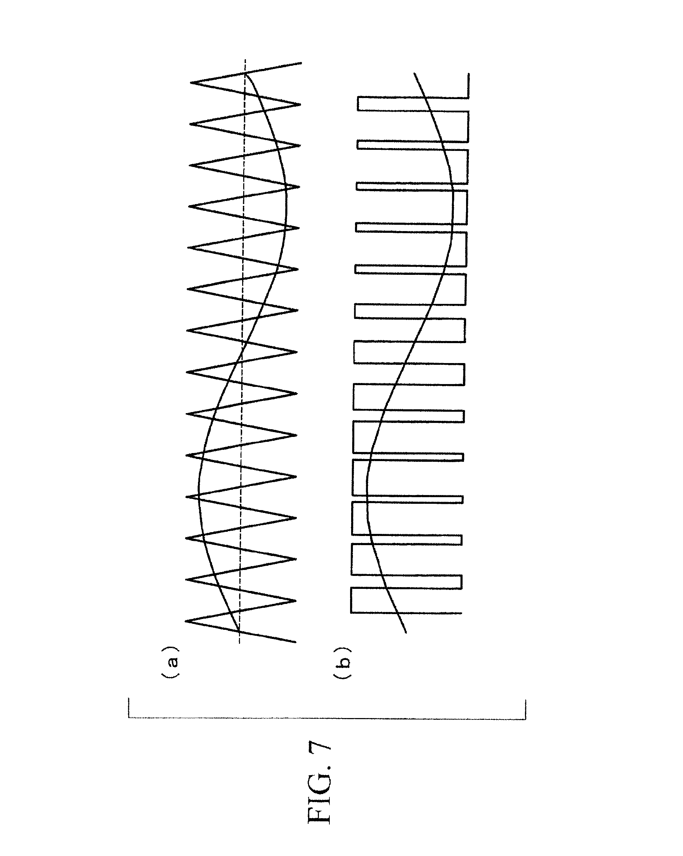

{Fig. 7} Fig. 7 illustrates a comparison between the voltage command input to the PWM control section and the motor phase voltage when normal PWM control is performed.

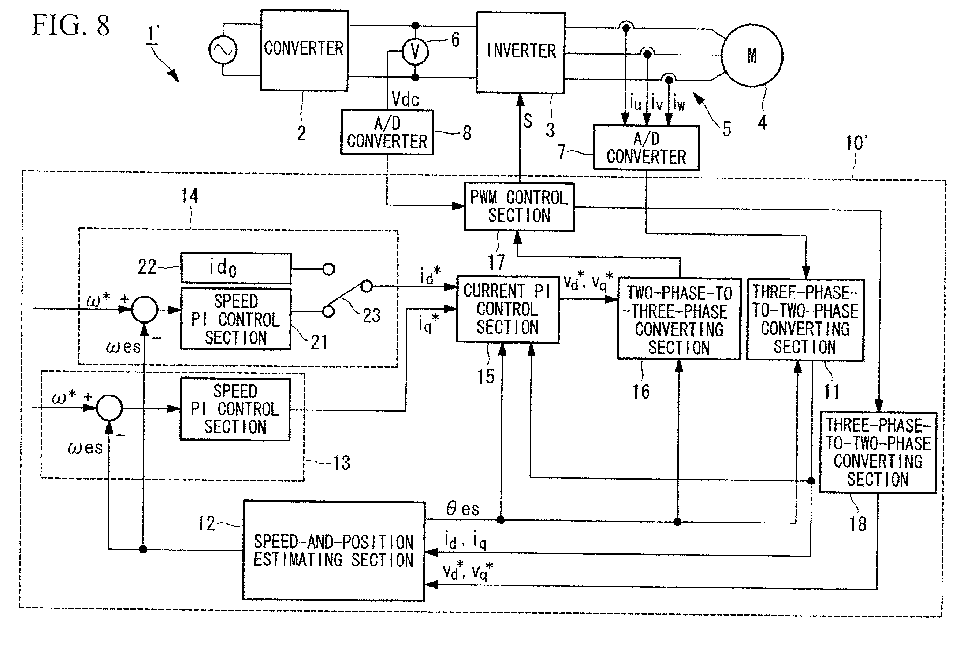

{Fig. 8} Fig. 8 schematically illustrates the configuration of a motor control device according to a second embodiment of the present invention.

{Description of Embodiments}

Embodiments of a motor control device and an air conditioner according to the present invention will be described below with reference to the drawings.

{First Embodiment}

Fig. 1 schematically illustrates the configuration of a motor control device according to a first embodiment of the present invention. As shown in Fig. 1, a motor control device 1 includes a converter 2 that converts AC power output from an AC power source into DC power, an inverter 3 that converts the DC power output from the converter 2 into three-phase AC power and outputs the three-phase AC power to a motor 4, and an inverter controller 10 that controls the inverter 3.

The inverter 3 includes upper-arm and lower-arm switching elements that are provided in correspondence with the respective phases. These switching elements are on-off controlled by gate drive signals S sent from the inverter controller 10 so that U-phase, V-phase, and W-phase motor voltages to be supplied to the motor 4 are controlled. The motor 4 is, for example, a permanent-magnet synchronous motor used as a driving source for a compressor in an air conditioner.

The motor control device 1 also includes current sensors 5 that measure the motor currents (U-phase, V-phase, and W-phase currents) flowing to the motor 4, and a voltage sensor 6 that measures an input DC voltage Vdc of the inverter 3. With regard to the motor currents, two phases may be detected, and the one remaining phase may be determined by calculation based on the two detected phases. As an alternative to the above-described measurement method, the three-phase motor currents may be measured by providing a shunt resistor on a DC bus L. Accordingly, the method for obtaining the three-phase motor currents is not particularly limited.

The three-phase motor currents detected by the current sensors 5 and the input DC voltage Vdc detected by the voltage sensor 6 are converted into digital signals by an analog-to-digital (A/D) converter 7 and an A/D converter 8, respectively. The digital signals are then output to the inverter controller 10.

The inverter controller 10 is, for example, a micro-processing unit (MPU) and has a computer-readable storage medium that stores programs for achieving various kinds of processing to be described below. A central processing unit (CPU) loads a program stored in this storage medium onto a main storage unit, such as a random access memory (RAM), and executes the program so that processing in each of the following sections is achieved. Examples of the computer-readable storage medium include a magnetic disk, a magnetooptical disk, and a semiconductor memory.

For each phase, the inverter controller 10 generates a gate drive signal S that causes the rotation speed of the motor 4 to match a motor-rotation-speed command sent from a higher-level controller (not shown). The inverter controller 10 controls the inverter 3 by sending these gate drive signals S to the switching elements corresponding to the respective phases in the inverter 3, so as to supply a desired three-phase AC voltage to the motor 4.

In detail, the inverter controller 10 includes a three-phase-to-two-phase converting section 11, a speed-and-position estimating section (motor-rotation-speed estimating means) 12, a q-axis-current-command generating section (q-axis-current-command generating means) 13, a d-axis-current-command generating section (d-axis-current-command generating means) 14, a current proportional-integral (PI) control section (voltage-command generating means) 15, a two-phase-to-three-phase converting section 16, and a pulse-width-modulation (PWM) control section (gate-drive-signal generating means) 17.

The three-phase-to-two-phase converting section 11 converts the three-phase motor currents output from the A/D converter 7 into two-phase currents, that is, q-axis and d-axis currents, and outputs the q-axis and d-axis currents to the speed-and-position estimating section 12.

The speed-and-position estimating section 12 uses the q-axis and d-axis currents from the three-phase-to-two-phase converting section 11 and two-phase voltage commands, that is, a q-axis voltage command vq* and a d-axis voltage command vd*, calculated by the current PI control section 15 in one previous clock cycle so as to calculate an estimated position θes and an estimated rotation speed ωes of the motor 4.

The estimated rotation speed ωes of the motor 4 is output to the q-axis-current-command generating section 13 and the d-axis-current-command generating section 14.

The q-axis-current-command generating section 13 is configured to generate a q-axis current command corresponding to a torque component of a load, and generates a q-axis current command iq* that causes a difference Δω between a rotation-speed command ω* sent from the higher-level controller, such as a higher-level controller that controls an air conditioner, and the estimated rotation speed ωes from the speed-and-position estimating section 12 to be closer to zero.

In detail, by performing integral control on the difference between the rotation-speed command ω* and the estimated rotation speed ωes, the q-axis current command iq* is generated. In this case, the q-axis-current-command generating section 13 has a limiter function and performs adjustment so that the q-axis current command iq* does not exceed an upper limit value set in advance.

The d-axis-current-command generating section 14 is configured to generate a d-axis current command corresponding to an excitation current component and includes a first processing section 21, a second processing section 22, and a selecting section 23.

The first processing section 21 performs integral control on the difference Δω between the rotation-speed command ω* and the estimated rotation speed ωes so as to generate a first d-axis current command id*. In this case, the first d-axis current command id* is a negative value that increases in the negative direction with increasing difference Δω.

Furthermore, similarly to the q-axis-current-command generating section 13, the first processing section 21 has a limiter function and performs adjustment so that the d-axis current command id* does not exceed an upper limit value set in advance.

The second processing section 22 generates a second d-axis current command, which is a predetermined value. In this case, the second d-axis current command is set to zero.

If a line voltage command for the motor 4 exceeds a maximum output voltage of the inverter 3 set on the basis of the input DC voltage Vdc of the inverter 3, the selecting section 23 determines that the present operational state is in a field-weakening control region and selects the first d-axis current command. If it is determined that the present operational state is not in the field-weakening control region, the second d-axis current command, that is, zero, is selected.

The line voltage command for the motor 4 may be a value actually measured by a sensor or may be a line voltage command estimated by using the two-phase voltage commands generated by the current PI control section 15 in one previous clock cycle.

For example, the selecting section 23 selects the first d-axis current command if the following condition based on expression (1) is satisfied, or selects the second d-axis current command if the following condition is not satisfied.

$$\text{Vmax2} = (\text{Vdc}^2/2) < \text{va}^2 = \text{vq}*^2 + \text{vd}*^2 \qquad (1)$$

In expression (1), Vmax2 denotes the square of a value corresponding to the maximum output voltage of the inverter 3, and va$^2$ denotes a value corresponding to the square of the line voltage of the motor 4.

The reason for using the square values to compare the line voltage command for the motor 4 and the maximum output voltage of the inverter 3, set on the basis of the DC voltage input to the inverter 3, with each other is to eliminate the need for square root calculation so as to reduce the computational load of the microcomputer.

The d-axis current command id* selected by the selecting section 23 in this manner is output to the current PI control section 15.

The current PI control section 15 receives the q-axis current command iq* from the q-axis-current-command generating section 13, the d-axis current command id* from the d-axis-current-command generating section 14, a q-axis current iq and a d-axis current id from the three-phase-to-two-phase converting section 11, and the estimated position θes of the motor 4 from the speed-and-position estimating section 12.

The current PI control section 15 calculates a difference between the q-axis current command iq* and the q-axis current iq and a difference between the d-axis current command id* and the d-axis current id, and generates a q-axis voltage command vq* and a d-axis voltage command vd* that cause these differences to be closer to zero. Specifically, proportional-integral (PI) control is performed on these differences, and in this case, the q-axis voltage command vq* and the d-axis voltage command vd* are calculated by referring to the estimated position θes of the motor 4 and are output to the two-phase-to-three-phase converting section 16. The d-axis voltage command vd* is not provided with a limiter, whereas the q-axis voltage command vq* is provided with a limiter based on vdc/√2.

The two-phase-to-three-phase converting section 16 refers to the motor position θes estimated by the speed-and-position estimating section 12 so as to convert the q-axis voltage command vq* and the d-axis voltage command vd* into three-phase voltage commands vu*, vv*, and vw*, and outputs these commands to the PWM control section 17. The PWM control section 17 receives the three-phase voltage commands vu*, w*, and vw* and the input DC voltage Vdc from the A/D converter 8. The PWM control section 17 generates a triangular wave with a predetermined carrier frequency and compares the triangular wave with each of the three-phase voltage commands vu*, vv*, and vw*. Moreover, the PWM control section 17 corrects the PWM-pulse duty width by using the input DC voltage Vdc so as to generate a gate drive signal S corresponding to each phase, and outputs the gate drive signals S to the inverter 3 (for example, see Fig. 7).

Next, the operation of the motor control device 1 having the above-described configuration will be described below with reference to Fig. 2.

For example, when the rotation-speed command ω* from the higher-level device gradually increases by changing the preset temperature of an air conditioner to which the motor control device 1 is applied in a period from time point t1 to time point t3 in Fig. 2, a difference between the rotation-speed command ω* and the estimated rotation speed ωes occurs. The q-axis-current-command generating section 13 generates the q-axis current command iq* in accordance with this difference and outputs the q-axis current command iq* to the current PI control section 15.

On the other hand, the d-axis-current-command generating section 14 compares the line voltage command for the motor 4 with the maximum output voltage of the inverter 3 and determines whether or not the present operational state is in the field-weakening control region. As a result, it is determined that the present operational state is not in the field-weakening control region in a period from time point t1 to time point t2, and the second d-axis current command id* (=0) generated by the second processing section 22 is selected by the selecting section 23 and is output to the current PI control section 15.

Accordingly, two-phase voltage commands vq* and vd* based on the q-axis current command iq* and the d-axis current command id* (=0) are generated in the current PI control section 15, and PWM signals (gate drive signals S) based on these two-phase voltage commands vq* and vd* are generated by the PWM control section 17 and are sent to the inverter 3.

By performing this control, the estimated rotation speed (i.e., motor rotation speed) ωes gradually increases so as to follow the rotation-speed command ω*.

When the rotation speed enters a high-speed region at time point t2 in Fig. 2 and the line voltage command for the motor 4 exceeds the maximum output voltage of the inverter 3, the selecting section 23 in the d-axis-current-command generating section 14 determines that the present operational state is in the field-weakening control region. Thus, the first d-axis current command id* is output from the d-axis-current-command generating section 14. Consequently, the d-axis current command id* gradually increases in the negative direction (see time point t2 to time point t3 in Fig. 2).

When the rotation-speed command ω* becomes stable at time point t3 in Fig. 2 so that the estimated rotation speed ωes becomes equal to the rotation-speed command ω*, the difference between the rotation-speed command ω* and the estimated rotation speed ωes becomes zero. Thus, the d-axis current command id* is maintained at the value corresponding to time point t3 until the rotation-speed command ω* changes (see time point t3 to time point t4 in Fig. 2).

Subsequently, for example, when the rotation-speed command ω* from the higher-level device gradually decreases by changing the preset temperature of the air conditioner in a period from time point t4 to time point t6 in Fig. 2, a difference between the rotation-speed command ω* and the estimated rotation speed ωes occurs. The q-axis-current-command generating section 13 generates the q-axis current command iq* in accordance with this difference. Because the rotation-speed command ω* changes in the decreasing direction this time, the q-axis current command iq* gradually decreases correspondingly.

Likewise, the d-axis-current-command generating section 14 generates the d-axis current command id* in accordance with the difference Δω. As a result, the d-axis current command id* changes gradually toward zero.

Due to the current commands generated in this manner, the estimated rotation speed ωes gradually decreases so as to follow the rotation-speed command ω*.

When the line voltage command for the motor 4 becomes lower than or equal to the maximum output voltage of the inverter 3 at time point t5 in Fig. 2, the d-axis-current-command generating section 14 outputs the d-axis current command id*, which is equal to zero. Thus, a voltage command is generated on the basis of the q-axis current command iq* in a period from time point t5 to time point t6.

When the input DC voltage Vdc of the inverter 3 changes, as shown in Fig. 3, or when a motor torque $\tau_L$ changes, as shown in Fig. 4, the q-axis current command iq* and the first d-axis current command id* are similarly generated in accordance with the difference $\Delta\omega$ between the estimated rotation speed $\omega$es, which is changed due to the aforementioned change, and the rotation-speed command $\omega$*. In this case, if the present operational state is in the field-weakening control region due to the change in the input DC voltage Vdc or the motor torque $\tau_L$, the first d-axis current command id* is output from the d-axis-current-command generating section 14 so that the d-axis current command id* changes in the negative direction, as shown in Fig. 3 or 4.

As described above, in the motor control device 1 and the air conditioner according to this embodiment, the d-axis current command id* is generated by performing integral control on the difference $\Delta\omega$ between the rotation-speed command $\omega$* and the estimated rotation speed $\omega$es in the high-speed rotation region in which the motor rotation speed cannot be made to follow the rotation-speed command $\omega$* by simply controlling the q-axis current corresponding to a torque component of a load. Thus, the d-axis current command id* can be increased in the negative direction as the difference $\Delta\omega$ between the rotation-speed command $\omega$* and the estimated rotation speed $\omega$es increases. By increasing the d-axis current command id* in the negative direction, the field-weakening effect is increased so that the induced voltage can be suppressed, whereby the motor rotation speed can be increased. Accordingly, by increasing the d-axis current command id* in the negative direction, the motor rotation speed can be made to follow the rotation-speed command $\omega$* even in the high-speed rotation region.

With the motor control device 1 according to this embodiment, the d-axis current command id* can be generated by directly using the motor rotation speed and also by performing integral control, which is a simple calculation method. Therefore, the calculation process can be significantly simplified as compared with the configuration disclosed in Patent Literature 1 described above. Consequently, an inexpensive microcomputer can be used as the motor control device 1, so that cost reduction can be expected.

Because the calculation process for the d-axis current command is simplified in the motor control device 1 according to this embodiment, the method used here is inferior to the motor control method disclosed in Patent Literature 1 in terms of the followability of the motor rotation speed. However, in the control operation of an air conditioner or the like, even if there is a slight lag in the following of the rotation speed, the lag does not affect the usability for the user. Even if the calculation process for the d-axis current command is simplified, as described above, sufficient accuracy can be achieved. Accordingly, the motor control device 1 according to the present invention is suitable for use in an apparatus with a focus on cost reduction rather than accuracy.

Although the second d-axis current command is set to zero in the d-axis-current-command generating section 14 in this embodiment, the second d-axis current command may alternatively be set to another value instead of zero. Furthermore, the second d-axis current command may be set to a fixed value or may be set on the basis of a minimum current control curve that is set uniquely on the basis of the characteristics of the motor 4, as shown in Fig. 5. In this case, the second processing section 22 adds a second d-axis current command id* by obtaining a d-axis current command id* corresponding to the q-axis current command iq* generated by the q-axis-current-command generating section 13 from the minimum current control curve.

Although integral control is used for generating the q-axis current command iq* and the d-axis current command id* in this embodiment, proportional-integral (PI) control may be used as an alternative. By adding proportional control in this manner, increased accuracy can be achieved.

{Second Embodiment}

Next, a motor control device and an air conditioner according to a second embodiment will be described below. Over-modulation control is a known kind of motor control. Over-modulation control is a control method in which the voltage utilization ratio is 1 or greater, and has been commonly used in recent years. The voltage utilization ratio is determined from the following expression (2).

$$\texttt{Voltage Utilization Ratio = (Effective Value of Line}$$
$$\texttt{Voltage Command)/((DC Voltage)/}\sqrt{2}) \quad \texttt{(2)}$$

In a PWM-waveform generating method based on a comparison between a triangular wave and a sine wave, when over-modulation control is performed, the three-phase current commands input to the PWM control section 17 from the two-phase-to-three-phase converting section 16 do not match the three-phase voltage commands, that is, phase voltages of the motor 4, generated on the basis of the gate drive signals S output to the inverter 3 from the PWM control section 17.

Fig. 6 illustrates a comparison between the waveforms. A sine wave in Fig. 6(a) and a dashed line in Fig. 6(b) denote the three-phase current commands input to the PWM control section 17 from the two-phase-to-three-phase converting section 16, whereas a solid line in Fig. 6(b) denotes the three-phase voltage commands, i.e., phase voltages of the motor 4, generated on the basis of the gate drive signals S output to the inverter 3 from the PWM control section 17.

Referring to Fig. 7, in a region where over-modulation control is not performed, such as when normal PWM control is performed, the three-phase current commands (see Fig. 7(a)) input to the PWM control section 17 from the two-phase-to-three-phase converting section 16 match the three-phase voltage commands (see Fig. 7(b)), i.e., phase voltages of the motor 4, generated on the basis of the gate drive signals S output to the inverter 3 from the PWM control section 17.

Therefore, in the first embodiment described above in which over-modulation control is not used, the two-phase voltage commands vq* and vd* output from the current PI control section 15 are input to the speed-and-position estimating section 12 as signals corresponding to the phase voltages of the motor 4, and the rotation speed and the position of the motor 4 are estimated by treating the two-phase voltage commands vq* and vd* as voltages corresponding to the phase voltages of the motor 4.

In contrast, in this embodiment in which over-modulation control is used, if the two-phase voltage commands vq* and vd* from the current PI control section 15 are input as voltages corresponding to the phase voltages of the motor 4, an error occurs between the two voltages, as shown in Fig. 6(b), resulting in reduced accuracy for estimating the rotation speed and the position of the motor 4.

Referring to Fig. 8, in a motor control device 1' according to this embodiment, signals output from the PWM control section 17 are input to the speed-and-position estimating section 12 in place of the two-phase voltage commands vq* and vd* output from the current PI control section 15.

Specifically, three-phase voltage signals are estimated from the gate drive signals S corresponding to the respective phases generated in the PWM control section 17, and the three-phase voltage signals are output to a three-phase-to-two-phase converting section 18. The three-phase-to-two-phase converting section 18 converts the three-phase voltage signals into two-phase voltage signals and outputs the two-phase voltage signals to the speed-and-position estimating section 12.

With the motor control device 1' according to this embodiment, the three-phase AC voltage signals based on the gate drive signals S output from the PWM control section 17 are converted from three phases to two phases, and are sent to the speed-and-position estimating section 12. Thus, an error relative to an actual motor voltage can be reduced even in a period in which over-modulation control is performed, thereby suppressing an increase in estimation errors in the rotation speed and the position of the motor 4.

When over-modulation control and field-weakening control are both performed, as in the motor control device 1' according to this embodiment, the rotation-speed region in which over-modulation control is performed overlaps the region in which field-weakening control is performed. However, even in the rotation-speed region in which the two kinds of control are simultaneously performed, stable control can be achieved without the over-modulation control and the field-weakening control interfering with each other. Specifically, the effect of over-modulation control first appears from the nonlinear region in which the voltage utilization ratio exceeds 1, and when the motor voltage begins to saturate, the increasing effect of the d-axis current commands in the negative direction starts to appear, so that the transition from over-modulation control to field-weakening control is performed smoothly.

In the period in which over-modulation control is not performed, the two-phase voltage commands from the current PI control section 15 may be supplied to the speed-and-position estimating section 12, as in the first embodiment described above, or the three-phase voltage commands output from the PWM control section 17 and converted from three phases to two phases may be output to the speed-and-position estimating section 12, as in the case of over-modulation control.

{Reference Signs List}

| 1, 1' | motor control device |
|---|---|
| 3 | inverter |
| 4 | motor |
| 10, 10' | inverter controller |
| 11, 18 | three-phase-to-two-phase converting section |
| 12 | speed-and-position estimating section |
| 13 | q-axis-current-command generating section |
| 14 | d-axis-current-command generating section |

| | |
|---|---|
| 15 | current PI control section |
| 16 | two-phase-to-three-phase converting section |
| 17 | PWM control section |
| 21 | first processing section |
| 22 | second processing section |
| 23 | selecting section |

**Claims**

1. A motor control device (1) **characterized in that** it comprises an inverter (3) that converts a DC voltage into a three-phase AC voltage and outputs the three-phase AC voltage to a motor (4); and inverter controlling means (10) for controlling the inverter (3), wherein the motor control device (1) performs field-weakening control by applying a negative current to a d-axis current,

   wherein the inverter controlling means (10) includes d-axis-current-command generating means (14) for generating a d-axis current command,

   wherein the d-axis-current-command generating means (14) includes

   first processing means (21) for generating a first d-axis current command by performing integral control on a difference between a rotation-speed command for the motor (4) and an estimated rotation speed of the motor (4),

   second processing means (22) for generating a second d-axis current command, which is a predetermined value, and

   selecting means (23) for selecting the first d-axis current command if the present operational state is in a field-weakening control region or selecting the second d-axis current command if the present operational state is not in the field-weakening control region.

2. The motor control device (1) according to Claim 1, wherein the first processing means (21) generates the first d-axis current command by performing proportional-integral control on the difference between the rotation-speed command and the estimated rotation speed.

3. The motor control device (1) according to Claim 1 or 2, wherein the selecting means (23) determines that the present operational state is in the field-weakening control region if a line voltage command for the motor exceeds a maximum output voltage of the inverter (3) set on the basis of the DC voltage input to the inverter (3).

4. The motor control device (1) according to any one of Claims 1 to 3, wherein the inverter controlling means (10) includes q-axis-current-command generating means (13) for generating a q-axis current command that causes the difference between the rotation-speed command for the motor (4) and the estimated rotation speed of the motor (4) to be closer to zero,

   voltage-command generating means for generating a two-phase voltage command on the basis of the d-axis current command and the q-axis current command,

   gate-drive-signal generating means for generating a gate drive signal to be output to the inverter (3) on the basis of the two-phase voltage command, and

   motor-rotation-speed estimating means for calculating the estimated rotation speed by using a two-phase current obtained on the basis of a current of the motor (4) and the two-phase voltage command generated by the voltage-command generating means.

5. The motor control device (1) according to Claim 4, wherein when over-modulation control in which a voltage utilization ratio is 1 or greater is performed, the motor-rotation-speed estimating means calculates the estimated rotation speed by using a two-phase voltage command obtained from a three-phase voltage command based on the gate drive signal generated by the gate-drive-signal generating means and the two-phase current.

6. The motor control device (1) according to any one of Claims 1 to 5, wherein the second d-axis current command is set to zero.

7. The motor control device (1) according to any one of Claims 1 to 5, wherein the second processing means (22) generates the second d-axis current command by using a minimum current control curve obtained from the characteristics of the motor (4).

8. An air conditioner **characterized in that** it comprises:

the motor control device (1) according to any one of Claims 1 to 7; and
a compressor motor (4) that is driven and controlled by the motor control device (1).

FIG. 1

## FIG. 2

FIG. 3

Vdc

ω*

ωes

Δω

id*

id=0    id<0    id=0

FIELD-WEAKENING
CONTROL REGION

EP 2 618 480 A2

13

FIG. 4

$\tau_L$

$\omega*$

$\omega es$

$\Delta\omega$

$id*$

| id=0 | id<0 | id=0 |

FIELD-WEAKENING
CONTROL REGION

# FIG. 5

FIG. 6

FIG. 7

(a)

(b)

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000278982 A
- WO 2005093943 A